# EUROPEAN PATENT APPLICATION

(11) **EP 3 779 223 A1**
(43) Date of publication of application: **17.02.2021**
(21) Application number: 19192144.4
(22) Date of filing: 16.08.2019
(51) Int. Cl.: F16D 55/2265

(54) **A GUIDE ASSEMBLY FOR A DISC BRAKE**

(71) Applicant: Meritor Heavy Vehicle Braking Systems (UK) Limited, Cwmbran, Gwent NP44 3XU (GB)
(72) Inventor: Thomas, Paul, Cwmbran, Gwent NP44 3XU (GB); Thompson, Callum, Cwmbran, Gwent NP44 3XU (GB)
(74) Representative: Foot, Paul Matthew James

(57) **Abstract**

A guide assembly for a disc brake comprising a guide pin (404) comprising a monolithic body with a mounting portion and a guiding portion, a brake carrier having a receiving portion configured to receive the mounting portion of the guide pin, whereby the receiving portion and the mounting portion form a mating contact and the guiding portion protrudes from an inboard side of the brake carrier when the mounting portion is received in the received portion, a weld to secure the mounting portion of the guide pin and the receiving portion of the brake carrier.

## Description

### FIELD

The present teachings relate to a disc brake and particularly, but not exclusively, to a guide assembly for a disc brake.

### BACKGROUND

Disc brakes are commonly used for braking heavy vehicles such as trucks, buses and coaches.

Heavy vehicle disc brakes typically comprise a brake carrier, a brake caliper and a brake rotor. The brake carrier is arranged to carry brake pads on each side of the brake rotor. The brake caliper is mounted on the brake carrier and slidably supported by at least one guide assembly such that, when the disc brake is actuated, the brake caliper is able to slide along the guide pin with respect to the brake carrier. As the brake caliper slides inboard, the brake pads are urged onto the opposing faces of the brake rotor in a clamping action and a braking action is achieved.

The guide assembly comprises a guide pin. In use, the guide pin is mounted on the brake carrier and located in the sliding bore of the brake caliper so that the brake caliper can slide along the guide pin. Typically, each guide pin comprises a smooth outer guide sleeve along which the brake caliper slides and a guide bolt which extends through the guide sleeve and is screwed into a threaded receiving hole of the brake carrier to secure the guide pin.

This conventional guide assembly arrangement has been proven over many years of usage. However, the guide pin design is problematic because it has multiple parts requiring precision manufacturing. The guide pin requires careful fitting to ensure it is correctly mounted on the brake carrier. The guide bolt tightening process can cause error.

It has also been recognised that in certain testing conditions, specifically when a vehicle undergoes a significant number of forward and reverse movements, there is a risk that the guide bolt of the guide pin may rotate and loosen from the threaded receiving hole of the brake carrier.

Previous attempts to solve this problem have utilised lock patches to inhibit loosening of the guide bolt.

However, the present inventors have recognised that this approach in effect deals with a symptom of the problem rather than the cause. The present inventors have also identified that the cause of the loosening bolt problem is the rotation of the guide sleeve and the rotation of the guide sleeve being frictionally transmitted into rotation of the bolt.

The present teachings seek to overcome or at least mitigate the problems of the prior art.

### SUMMARY

A first aspect of the teachings relates to a guide assembly for a disc brake to slidably support a brake caliper. The guide assembly comprises:
a guide pin comprising a monolithic body with a mounting portion and guiding portion;
a brake carrier comprising a receiving portion configured to receive the mounting portion of the guide pin, whereby the mounting portion and receiving portion form a mating contact and the guiding portion protrudes from an inboard side of the brake carrier when the mounting portion is received by the receiving portion;
a weld securing the mounting portion of the guide pin and the receiving portion of the brake carrier.

The monolithic body of the guide pin is a simple one-piece body. By having a guide pin with a monolithic structure, the problems associated with manufacturing, cost, fitting, failure, relative movement and loosening of conventional guide pins with multiple component parts are avoided.

The monolithic body has a first end and second end. The monolithic body of the guide pin may be substantially solid or hollow.

The mounting portion may comprise a first end face of the monolithic body, whereby the mounting portion end face is generally flat or curved.

The mounting portion may comprise a first region of monolithic body and the guiding portion may comprise a second region of the monolithic body. The mounting portion region may be flush, has a larger cross-sectional area or a smaller cross-sectional area relative to the guiding portion region.

The cross-sectional profile of the guide pin may be substantially constant along the length of the monolithic body, whereby the mounting portion region and guiding portion region have the same cross-sectional profile. Alternatively, the mounting portion region may have a different cross-sectional profile to the guiding portion region.

The mounting portion may have a generally circular cross-sectional profile, a polygonal cross-sectional profile or a tapered profile.

The receiving portion is configured to receive the mounting portion so as to form a mating contact with mounting portion. The surface mating contact defines an interface between the mounting portion and receiving portion. A boundary edge defines an inboard outboard intersection between the mounting portion and receiving portion.

The receiving portion may comprise a surface formed on the inboard side of the brake carrier against which the mounting portion can be arranged and abut, forming a mating contact. The receiving portion may comprise a recess, slot or bore formed in the brake carrier within which the mounting portion can be fitted and form a mating contact.

The recess, slot or bore may have a corresponding profile to the mounting portion or a different cross-sectional profile to the mounting portion.

The profile of the mounting portion and receiving portion may be selected according to the type of welding technique used to form the weld.

The weld is a joint that conjoins the mounting portion of the guide pin and receiving portion of the brake carrier. As a consequence, the guide pin is permanently secured to the brake carrier, and so relative movement of the guide pin with respect to the brake carrier is prevented.

The weld may be any suitable type of weld, formed by any suitable type of welding process. For example, the weld may be a fusion weld at an intersection between the mounting portion and the receiving portion. The fusion weld may be formed by any suitable fusion weld process during which external heating is provided to melt and fuse molten material at the intersection of the mounting portion and receiving portion. An example of fusion welding is gas metal arc welding.

Alternatively, the weld may be a friction weld at an interface of the mounting portion and receiving portion. The friction weld may be formed by any suitable friction weld process during which frictional heat is generated to plasticise and meld material at the interface of the mounting portion and receiving portion

Advantageously, by forming in the solid-state, the friction weld maintains the original properties of the mounting portion and receiving portion materials and does not suffer from the defects and distortion associated with the melting and solidifying of a fusion weld. Since no shielding gases, flux, filler material or external heating are required as with a fusion weld the friction weld is cost effective and environmentally friendly.

To enhance the securing of the mounting portion by a friction weld, the guide assembly may further comprise flash at the intersection between the guide pin and brake carrier. The flash comprises waste material discharged from the interface of mounting portion and the receiving portion during friction welding. The flash preferably encircles the mounting portion forming a collar at the intersection between the guide pin and brake carrier, or a stiffening rib.

To provide a mounting portion suitable for welding, the guide pin may comprise a monolithic body formed from steel (e.g. stainless steel, carbon steel), iron (e.g. cast iron, ductile iron) or any other suitable material for welding. Likewise, to provide a receiving portion suitable for welding, the brake carrier may comprise steel, iron or any other suitable material for welding. The mounting portion and/or receiving portion may comprise the same or dissimilar materials suitable for welding. To produce a friction weld, the mounting portion and receiving portion may comprise a material having a plasticising temperature in the range of 900 to 1300°C. The mounting portion and/or receiving portion may alternatively or additionally comprise a surface coating material applied to the mounting portion and/or receiving portion that is plasticisable during the friction welding process to form or augment the friction weld.

A second aspect of the teachings relates to a disc brake comprising:
a brake carrier;
a brake caliper;
a guide assembly according to the first aspect of the teachings.

When assembled, the mounting portion of the guide pin is received by the receiving portion of the brake carrier and secured by the weld. The guiding portion of the guide pin extends from the inboard-side of the brake carrier into a corresponding bore of the brake caliper such that the brake caliper is slidably supported and is able to slide along the guiding portion with respect to the brake carrier during use.

A third aspect of the teachings relates to a method of mounting a guide pin of a disc brake. The method comprises:
providing a guide pin comprising a monolithic body with a mounting portion and a guiding portion;
providing a receiving portion formed in a brake carrier;
receiving the mounting portion in the receiving portion such that the mounting portion and receiving portion form a mating contact and the guide portion protrudes from the inboard side of the brake carrier;
welding to form a weld between the mounting portion and receiving portion and thereby join the guide pin and brake carrier.

The welding may comprise fusion welding the mounting portion and receiving portion, whereby fusion welding may comprise:
heating the mounting portion and receiving portion so as to melt and fuse molten material at an intersection of the mounting portion and receiving portion;
cooling to solidify the fused molten material to form a fusion weld zone between the mounting portion and receiving portion.

The welding may comprise friction welding the mounting portion and receiving portion, and whereby friction welding may comprise:
applying contact pressure and inducing mechanical movement of the mounting portion and/or receiving portion so as to generate sufficient frictional heat to plasticise and meld plasticised material at an interface of the mounting portion and receiving portion;
cooling the melded plasticised material, whilst maintaining contact pressure, to form a friction weld zone between the mounting portion and receiving portion.

Advantageously, the friction weld is formed in the solid-state and does not require substantial heating to melt the mounting portion and receiving portion materials. No external heating or additional components such as a consumable welding rod, flux or shielding gas are required to form the friction weld.

Inducing mechanical movement may comprise inducing rotary or reciprocating linear motion of the mounting portion relative to the receiving portion. The rotary motion may be induced by using a direct drive device such as a motor to rotate the guide pin. The rotary motion may be induced using an inertia drive device such as flywheel to rotate the guide pin. The reciprocating linear motion may be induced by using an oscillator device such as a resonating lathe to reciprocate the guide pin.

The method may further comprise trimming or removing flash formed at an intersection between the guide pin and brake carrier during friction welding.

### BRIEF DESCRIPTION OF THE DRAWINGS

For a better understanding of the present teachings and to show how they may be carried into effect, reference will now be made by way of example only, to the accompanying drawings, in which:
Figure 1 is an isometric view of an embodiment of a disc brake according to the present teachings;
Figure 2 is an isometric view of the disc brake of Figure 1, with the brake rotor mounted in situ and a cross-sectional view of a first embodiment of a guide assembly according to the present teachings;
Figure 3 is an exploded isometric view of the brake carrier and two guide assemblies of the first embodiment;
Figure 4 is a cross-sectional view of the brake carrier and first embodiment of the guide assembly, with the guide pin received by the brake carrier on the plane 4-4 of Figure 3;
Figure 5 is an exploded isometric view of the brake carrier and two guide assemblies of a second embodiment;
Figure 6 is an exploded side view of the brake carrier and a second embodiment of the guide assembly;
Figure 7 is a cross-sectional view of the brake carrier and second embodiment of the guide assembly, with the guide pin received by the brake carrier on the plane 7-7 of Figure 5;
Figure 8 is an isometric view of the brake carrier and two guide assemblies of the second embodiment, with the mounting portion and receiving portion secured by a friction weld and flash;
Figure 9 is a cross-sectional view of the brake carrier and a third embodiment of the guide assembly, with the guide pin received by the brake carrier;
Figure 10 is an isometric view of the brake carrier and two guide assemblies according to the third embodiment, with the mounting portion and receiving portion secured by a fusion weld;
Figure 11 is an exploded perspective view of the brake carrier and two guide assemblies of a fourth embodiment;
Figure 12 is a cross-sectional view of the brake carrier and fourth embodiment of the guide assembly on the plane 12-12 of Figure 11;
Figures 13 to 16 are exploded isometric views of the brake carrier and fifth, sixth, seventh and eighth embodiments of the guide assembly; and
Figure 17 is an enlarged view of a carrier abutment showing a further embodiment.

### DETAILED DESCRIPTION

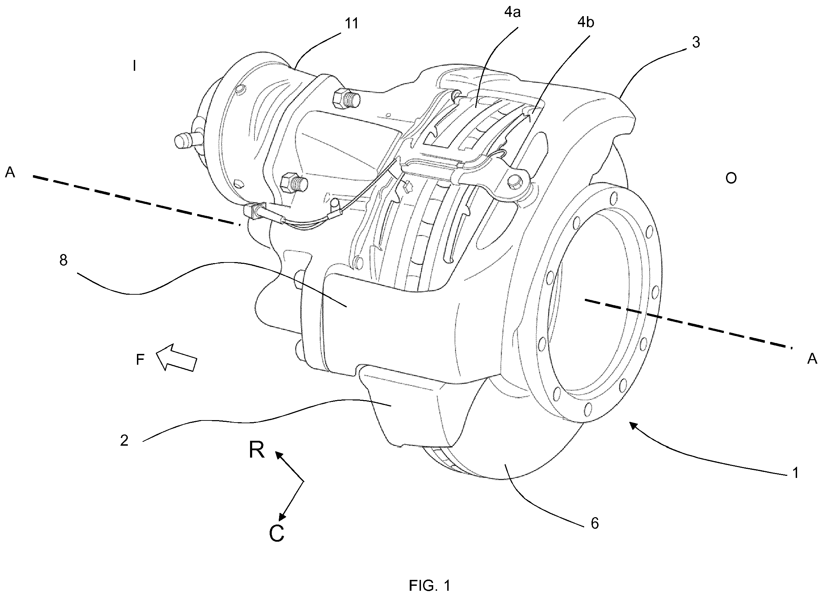

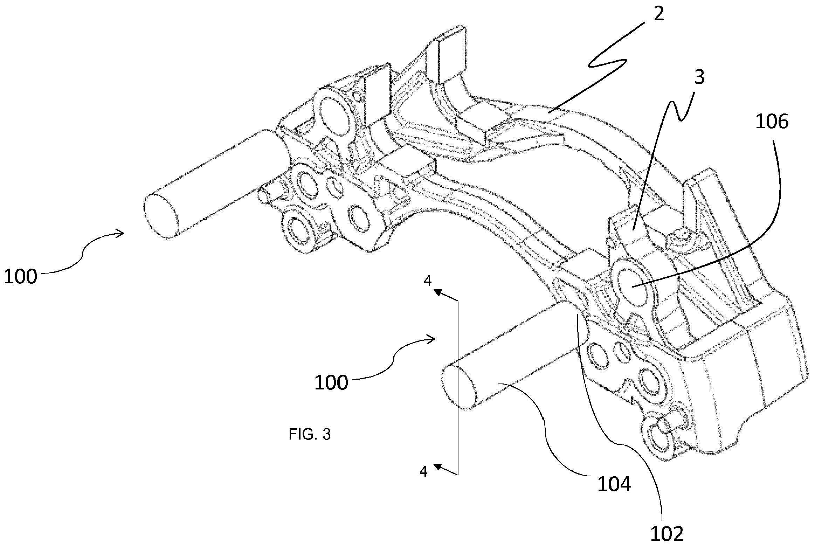

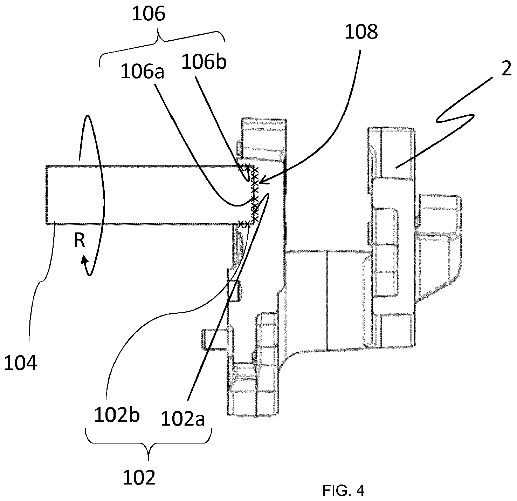

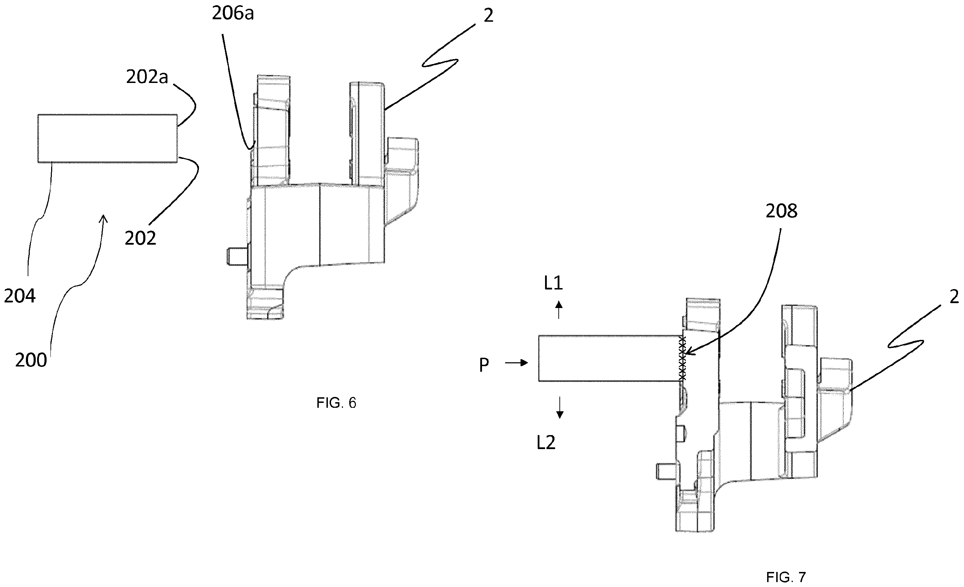

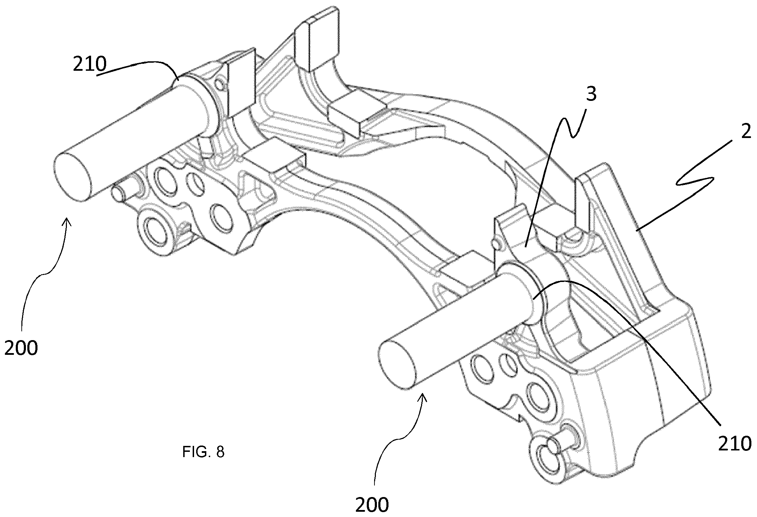

With reference to Figures 1 to 17, a disc brake according to the present teachings is indicated generally at 1.

Various orientations of the disc brake are described. In particular the directions inboard I and outboard O refer to the typical orientation of the disc brake when fitted to a vehicle and with reference to the longitudinal centre line of the vehicle. The radial direction R refers to an orientation with reference to the centre of the rotor (axis A-A) and is for example the direction in which brake pads may be fitted and removed from a disc brake. The circumferential direction C refers to a tangent to the direction of the rotation of the rotor and is for example the direction in which a friction induced load from a brake pad is laterally transmitted into an abutment of a brake carrier.

With reference to Figure 1, the disc brake 1 comprises a brake carrier 2. The brake carrier 2 carries an inboard brake pad 4a and an outboard brake pad 4b. A brake rotor 6 is positioned between the brake pads and is rotatable about an axial axis A. A brake caliper 8 is slidably mounted with respect to the brake carrier by at least one guide assembly 2.

Each guide assembly 10a, 10b comprises a guide pin 100. The guide pin 100 is mounted on the brake carrier and extends from the inboard-side of the brake carrier into a respective sliding bore 12 of the brake caliper 8.

One of the guide assemblies 10b may be shorter than the other guide assembly 10a in order to accommodate vehicle installation constraints and/or because one acts the primary guide on the leading edge in normal direction of rotation and the other acts as a secondary guide. In an alternative embodiment the guide pins may be of equal length.

The guide pins of the present teachings are mounted to a portion of the carrier 2 that extends radially outwardly to form an abutment 3. This is a strong part of the carrier with sufficient space to form such a mounting. The abutment takes the (circumferentially directed) braking load from the inboard brake pad 4a under braking and transmits it to the carrier.

The disc brake 1 further comprises an actuator 11 for moving the inboard brake pad into frictional contact with the brake rotor 6 when the disc brake is actuated (via a suitable mechanism (not shown) located within the caliper 8). When the inboard brake pad 4a is pushed by the actuator 11 into contact with the rotor 6, a reaction force F drives the brake caliper 8 to slide inboard relative to the brake carrier 2 along the guide pin 100. As the brake caliper 8 slides inboard, it moves the outboard brake pad 4b towards the brake rotor. Hence, the brake rotor 6 becomes clamped between the inboard and outboard brake pads 4a, 4b and the rotation of the brake rotor is frictionally inhibited.

In the guide assembly according to the present teachings, the guide pin 100 comprises a monolithic body with a guiding portion 104 and mounting portion 102. The mounting portion is configured to mount the guide pin on the brake carrier 2. The guiding portion 104 is configured to extend in the axial direction A from the inboard side of brake carrier 2 into a corresponding bore 12 of brake caliper. The guiding portion thereby slidably supports the brake caliper 8 and is able to guide the sliding of the brake caliper relative to the brake carrier during use.

By having a one-piece (monolithic) body structure, the guide pin 100 has a simple design that is low cost to manufacture. The problems associated with mounting, the relative movement and loosening of guide pins with multiple components are avoided.

The monolithic body is elongate and has a first end and a second end.

The monolithic body may be substantially solid or hollow. For example, the monolithic body may comprise a solid cylinder having a circular cross-sectional profile, a hollow tube having a first opening at the first end and a second opening at the second end, or a capped tube closed at the first end and open at the second end.

The mounting portion 102 of the guide pin 100 may comprise a first end face and/or a first region of the monolithic body. The remainder of the monolithic body may form the guiding portion 104 of the guide pin 100.

The mounting portion 102 may comprise a first end face of the monolithic body, whereby the mounting portion has a generally flat or curved surface. The curved surface of the end face may be concave or convex.

The mounting portion 102 may comprise a first region of the monolithic body, whereby the mounting portion has a generally circular cross-sectional profile, a polygonal cross-sectional profile (regular or irregular) or a tapered cross-sectional profile. For example, the mounting portion may have a square, rectangular, hexagonal, octagonal profile. Alternatively, the mounting portion may, for example, comprise a cone shaped first region of the monolithic body, having a tapering conical profile.

The cross-sectional profile of the guide pin 100 may be substantially constant along the length of the monolithic body. As such, the mounting portion 102 and the guiding portion 104 may have the same cross-sectional profile. Alternatively, the mounting portion may have a different cross-sectional profile to the guiding portion.

The mounting portion 102 may be generally flush with the guiding portion 104, whereby the mounting portion and guiding portion have generally the same cross-sectional area.

The mounting portion 102 may have a smaller diameter relative to the guiding portion 104, whereby the mounting portion has a smaller cross-sectional area than the guiding portion.

The mounting portion 102 may have a larger diameter relative to the guiding portion 104, whereby the mounting portion has a larger cross-sectional area than the guiding portion. For example, the mounting portion 102 may comprise a circumferential flange protruding radially at the first region of the body.

A receiving portion 106 of the brake carrier 2 is configured to receive the mounting portion 102 so as to form a mating contact with the mounting portion, and allow for the mounting of the guide pin 100 on the brake carrier 2. The receiving portion 106 may comprise a surface against which the mounting portion can be abutted. The receiving portion may comprise a recess with an opening formed on the inboard side of the brake carrier, in which the mounting portion can be fitted and form a mating contact with the inner surface of the recess. The receiving portion may comprise a slot with a side opening formed in the brake carrier in which the mounting portion can be fitted and form a mating contact with the inner surface of the slot. The receiving portion may comprise a bore extending through the brake carrier through which the mounting portion can be slidably received and form a mating contact with the inner surface of the bore.

To inhibit movement of the guide pin relative to the brake carrier and thereby enhance the lifespan of the guide pin, the mounting portion 102 and receiving portion 106 are secured by a weld. The weld may be any suitable weld formed between any mounting portion and receiving portion using any suitable welding process.

For example, the weld may be a fusion weld at an intersection between the mounting portion and the receiving portion, and comprises fused molten materials of the mounting portion and the receiving portion. The fusion weld may be formed using any fusion weld process where the mounting portion and the receiving portion materials are heated by an external heat source at the intersection edge and melted. The molten materials fuse (intermix) and solidify forming the fusion weld. The fusion weld process may comprise laser welding, metal inert gas (MIG) welding, metal active gas (MAG) welding, or tungsten inert gas (TIG) welding or any other conventional fusion weld process.

, Alternatively, the weld may be a friction weld at an interface between the mounting portion and the receiving portion, and comprises melded plasticised materials of the mounting portion and the receiving portion.

The friction weld is a solid-state bond formed at an interface of the mounting portion and receiving portion by applying contact pressure and moving the mounting portion and/or receiving portion to generate frictional heat. The contact pressure on the mounting portion and/or receiving portion maintains contact between the mounting portion and receiving portion, whilst the frictional heat softens the materials of the mounting portion and receiving portion at the interface and they become plastic. The continuing motion causes the plastic materials to meld (combine). When motion stops, contact pressure continues to be applied and the melded plasticised materials cool forming the friction weld. The friction weld process may comprise any suitable friction weld process. For example, the friction weld process may comprise inertia friction welding where a flywheel induces rotary motion of the guide pin relative to the receiving portion, direct drive friction welding where a motor is used to rotate the guide pin, or linear friction welding where a resonating lathe induces linear oscillating motion of the mounting portion

The mounting portion and receiving portion may be formed from any suitable material for welding. Alternatively or additionally, the mounting portion and/or receiving portion may comprise a coating surface formed from any suitable material for welding.. For example, the mounting portion and/or receiving portion may be formed from steel (stainless steel, carbon steel) or iron. The mounting portion and/or receiving portion may comprise a material having a plastic forming temperature within the range of approximately 900 and 1300°C.

The guide assembly may further comprise flash at an intersection between the mounting portion and receiving portion so as to enhance the securing of the guide pin and brake carrier. The flash comprises waste material discharged from the interface of mounting portion and the receiving portion during friction welding. The flash preferably encircles the mounting portion forming a collar at the intersection between the guide pin and brake carrier, or a stiffening rib.

When the guide pin 100 in mounted on the brake carrier 2, the mounting portion is welded to the receiving portion and the guiding portion protrudes from the inboard side of the brake carrier in the axial direction A, and is configured to extend into a corresponding aperture 12 of the brake caliper so that the caliper can slide along the guide relative to the brake carrier.

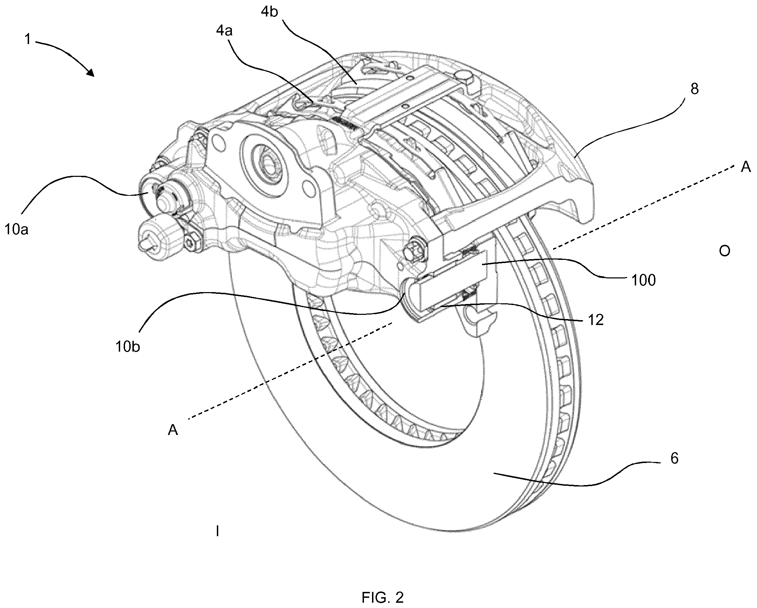

Figures 2-17 depict different embodiments of the guide assemblies according to the present teachings, by way of example. Each successive embodiment has reference numerals for similar parts labelled 100 greater than the preceding embodiment.

In a first embodiment of a guide assembly depicted in Figures 1 to 4, the guide pin 100 is a solid stainless steel cylinder monolithic body having a substantially constant circular cross-sectional profile extending the length of the body from the first end to the second end. The mounting portion 102 of the guide pin comprises a first end face 102a of the cylinder body and a first region 102b of the cylinder body. The first region has a circular outer surface and the first end face has a substantially flat surface. The guiding portion 104 of the guide pin comprises the remaining second region of the body. The receiving portion 106 of the brake carrier comprises a closed recess formed in the brake carrier in which the mounting portion can be fitted and form a mating contact. The recess comprises a substantially flat rear wall 106a and an inner circular wall 106b that correspond to the surfaces of the mounting portion. When the mounting portion is inserted in the receiving portion recess, mating contact forms between the corresponding flat and circular surfaces, defining an interface 108) between the mounting portion and receiving portion.

To secure the guide pin 100 to the brake carrier 2 a friction weld is formed at the interface 108 between the mounting portion and the receiving portion using a direct drive welding process to rotate the mounting portion in a rotary direction R.

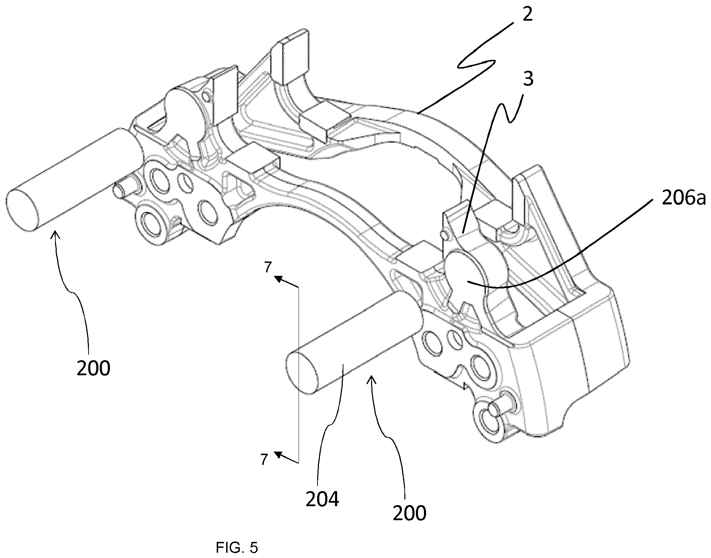

In a second embodiment of a guide assembly depicted in Figures 5 to 8 the mounting portion 202 of the guide pin comprises a first end face 202a of the cylinder body. To secure the guide pin 200 to the brake carrier 2 a friction weld is formed at the interface between the mounting portion and the receiving portion.

The end 202a face has a substantially flat surface. The guiding portion 204 of the guide pin comprises the remainder of the cylinder body. The receiving portion 206 of the brake carrier comprises a corresponding substantially flat surface 206a formed on the inboard side of the brake carrier 2 from cast iron. The mounting portion face 202a is arranged in mating contact with the receiving portion surface 206a, forming an interface 208 between the mounting portion face and the receiving portion surface.

To fix the guide pin 200 to the brake carrier 2, a friction weld is formed at the interface between the mounting portion and receiving portion using a linear friction welding process to oscillate the mounting portion in a linear direction between L1 and L2 in a vertical plane whilst exerting a pressure P in an axial direction.

During the welding process, waste flash material is expelled from the interface between the mounting portion and receiving portion and collects at the intersection between the guide pin 200 and brake carrier 2. The flash is trimmed to form a stiffening collar 210 at the intersection so as to augment the securing of the guide pin to the brake carrier.

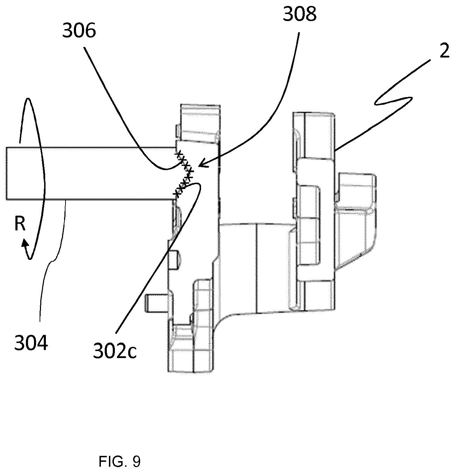

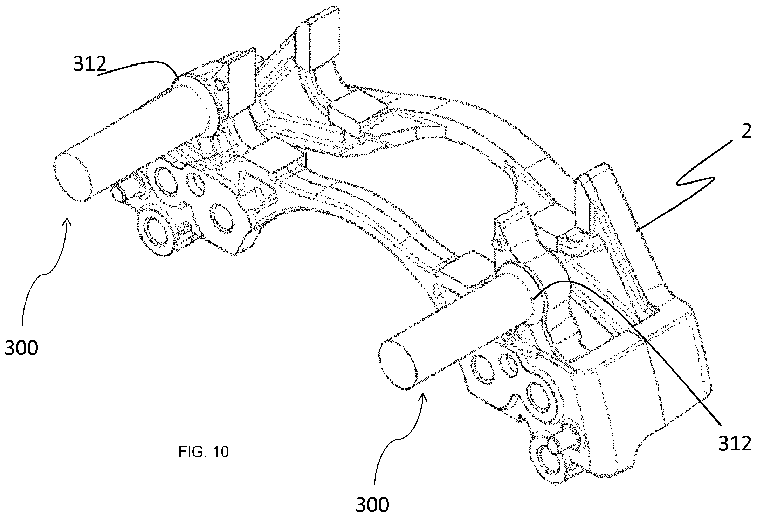

In a third embodiment of a guide assembly depicted in Figures 9 and 10, the mounting portion 302 of the guide pin comprises a tapered cone 302c at the first region of the cylinder body. The guiding portion 304 of the guide pin 300 comprises the remaining second region of the body with a circular cross-sectional profile. The receiving portion 306 of the brake carrier 2 comprises a closed recess formed in the brake carrier in which mounting portion can be fitted and form a mating contact. The recess 306 comprises a corresponding tapered profile that corresponds to the tapering surfaces of the mounting portion. Consequently, the mounting portion 302c forms a mating contact with the receiving portion 306. An interface 308 is defined between the tapered mounting portion and the receiving portion recess.

To secure the guide pin to the brake carrier a fusion weld is formed at the intersection between the mounting portion of the guide pin and the receiving portion using a fusion welding process, again by rotating the guide pin in a direction R. The fusion weld 112 encircles the intersection on the inboard-side of the brake carrier 2, so as to fix the guide pin and brake carrier.

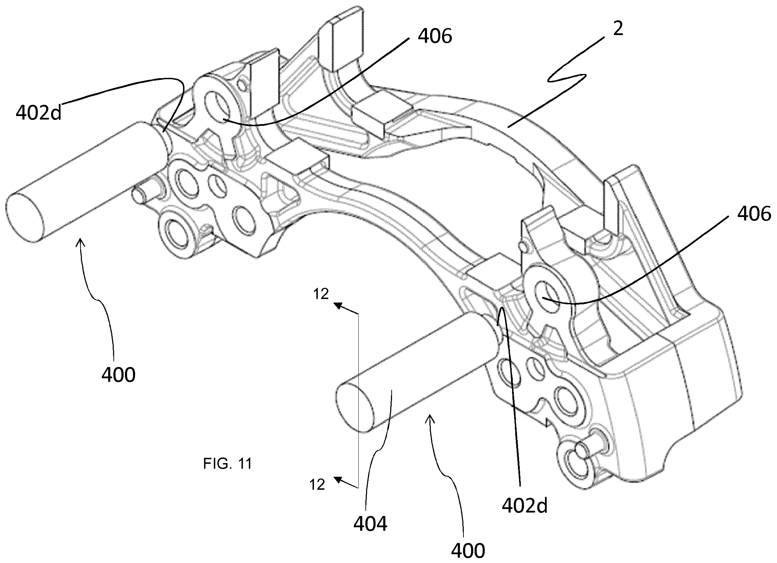

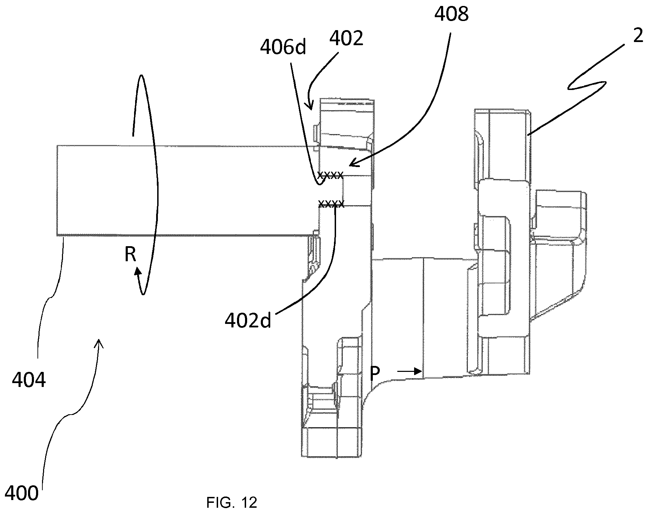

In a fourth embodiment of the guide assembly depicted in Figures 11 and 12, the mounting portion 402 comprises a protrusion 402d at the first region and the guiding portion 404 comprises the remaining second region of the monolithic guide pin 400. The mounting portion 402 and guiding portion 404 both have a circular cross-sectional profile. However, the mounting portion has a smaller diameter than the guiding portion and has a smaller cross-sectional area. The receiving portion 406 comprises a bore hole extending through the brake carrier 2 in which the mounting portion can be received and forms a mating contact. The bore hole has a circular cross-sectional profile and area defined by an inner circular surface 406d that corresponds to the mounting portion. When the mounting portion is inserted in the receiving portion recess, mating contact forms between the corresponding circular surfaces, defining an interface 408 between the mounting portion and receiving portion

To secure the guide pin to the brake carrier a friction weld is formed at the interface between the mounting portion and the receiving portion. In this embodiment, an inertia friction welding process is utilised to rotate the mounting portion in a rotatory direction R and generate sufficient frictional heating for the interface materials to plasticise and meld.. Additionally, the respective outboard face of the guide pin 400 that surrounds the protrusion 402d and inboard face of the carrier surrounding the bore may additionally plasticise and meld.

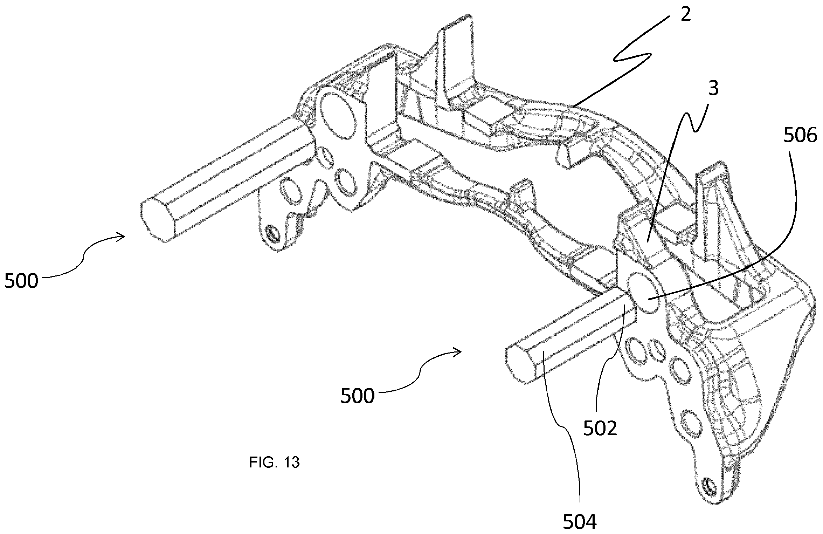

Figure 13 illustrates an embodiment where the guide pin 500 has an octagonal profile and the receiving portion 506 is a bore with a diameter less than the diameter between opposing vertices/intersections of the guide pin. As such a friction weld is formed by a combined rotary and axial motion of the guide pin 500 towards the carrier, with the mounting portion 502 being an outboard part of the outer face and the remaining part of the octagonal face being the guiding portion 504.

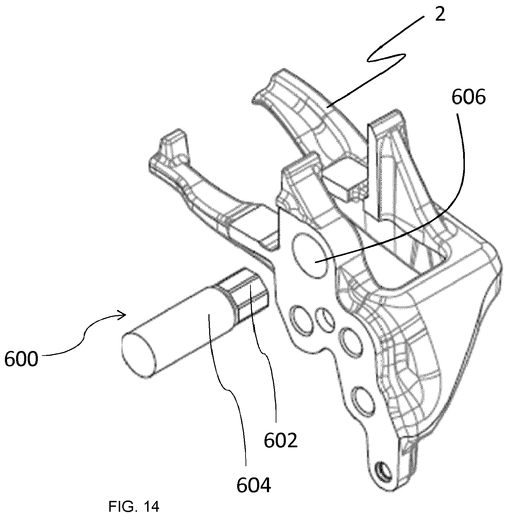

Figure 14 is an embodiment similar to that of Figure 13, but whilst the mounting portion 602 is octagonal the guiding portion 604 is cylindrical. The mounting may occur using rotary friction welding or fusion welding.

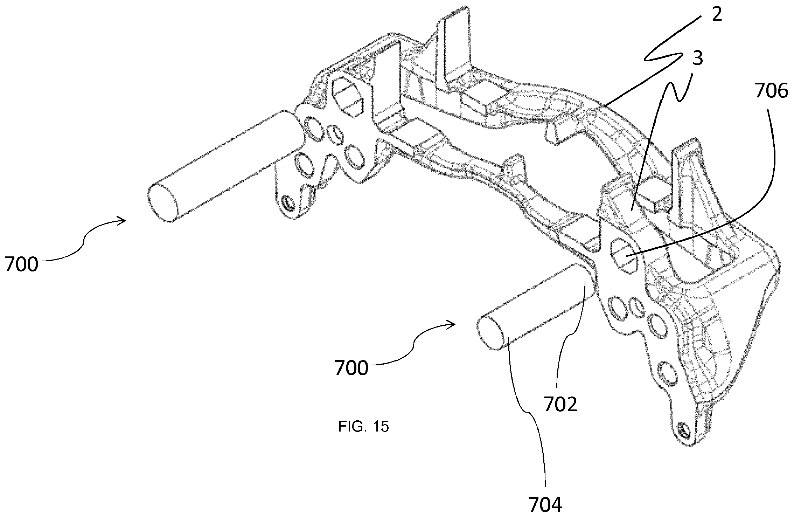

Figure 15 reverses the profiles of the guide pin 700 and receiving portion 706 to provide an octagonal receiving portion and cylindrical guide pin. The mounting may occur using rotary friction welding or fusion welding.

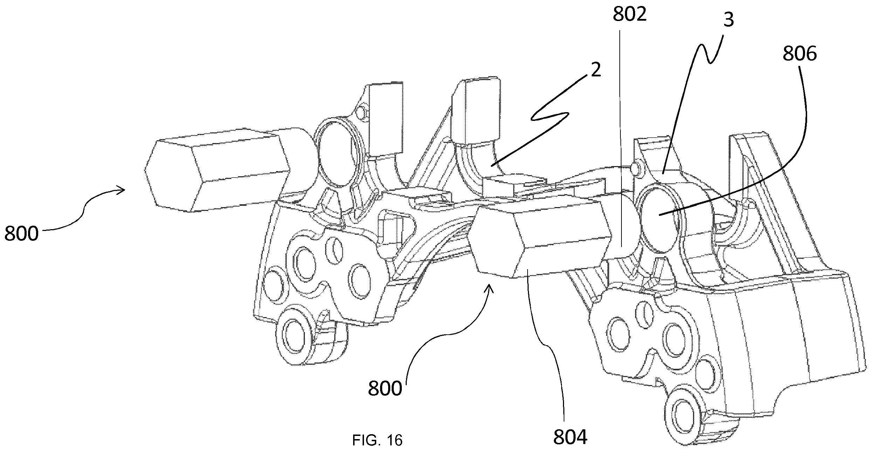

In the embodiment of Figure 16, the receiving portion is cylindrical, similar to Figure 14, but the mounting portion 802 is also cylindrical, whereas the guiding portion 804 is hexagonal. The mounting may occur using rotary friction welding or fusion welding.

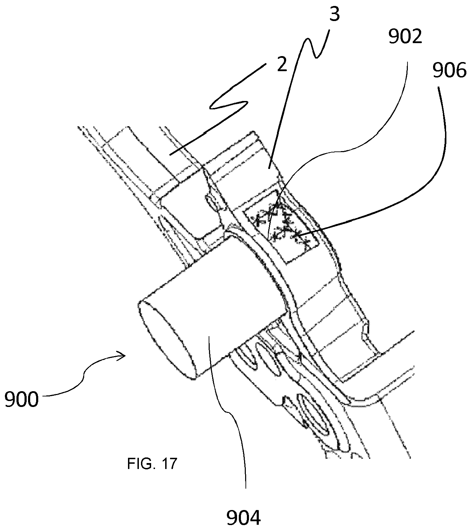

In Figure 17 a cylindrical guide pin 900 is mounted into a cylindrical receiving portion 906 of the carrier 2, similar to Figure 16. However, a window 925 is provided in the carrier 2. The window 925 allows access to a portion of the mounting portion 902 to enable a puddle fusion weld to be formed therein.

Although the teachings have been described above with reference to one or more preferred embodiments, it will be appreciated that various changes or modifications may be made without departing from the scope of the teachings as defined in the appended claims.

## Claims

1. A guide assembly for a disc brake comprising:
a guide pin comprising a monolithic body with a mounting portion and a guiding portion;
a receiving portion of a brake carrier configured to receive the mounting portion of the guide pin, whereby the receiving portion and the mounting portion form a mating contact and the guiding portion protrudes from an inboard side of the brake carrier when the mounting portion is received in the received portion;
a weld to secure the mounting portion of the guide pin and the receiving portion of the brake carrier.

2. A guide assembly according to claim 1, wherein the weld is a fusion weld.

3. A guide assembly according to claim 1, wherein the weld is a friction weld.

4. A guide assembly according to any preceding claim, wherein the monolithic body of the guide pin is solid or hollow.

5. The guide assembly according to any preceding claim wherein the mounting portion comprises a first end face of the monolithic body, whereby the face is a flat or curved surface.

6. The guide assembly according to any preceding claim, wherein the mounting portion comprises a first region of the monolithic body with a circular cross-sectional profile, a polygonal cross-sectional profile or a tapered cross-sectional profile.

7. The guide assembly according to any claim 6, wherein the mounting portion is flush, has a larger cross-sectional area or a smaller cross-sectional area relative to the guiding portion.

8. A guide assembly according to any preceding claim, wherein the receiving portion is a receiving face, a recess, a slot or a bore of the brake carrier.

9. A guide assembly according to any preceding claim, further comprising a flash collar at the intersection between the guide pin and brake carrier.

10. A disc brake comprising:
a brake carrier;
a brake caliper;
a guide assembly according to any of claims 1 to 9.

11. A method of mounting a guide pin of a disc brake
providing a guide pin comprising a monolithic body with a mounting portion and a guide portion;
providing a receiving portion formed in a brake carrier;
receiving the mounting portion in the receiving portion such that the mounting portion and receiving portion contact and the guide portion protrudes from the inboard side of the brake carrier;
welding to form a weld between mounting portion and receiving portion.

12. The method according to claim 11, wherein the welding comprises fusion welding and the fusion welding comprises:
heating the mounting portion and receiving portion so as to melt and fuse the materials of the mounting portion and receiving portion;
cooling to solidify the fused melted materials to form a fusion weld zone between the mounting portion and receiving portion.

13. The method according to claim 11, wherein the welding comprises friction welding, and the friction welding comprises:
applying contact pressure and inducing mechanical movement of the mounting portion and/or receiving portion so as to generate sufficient frictional heat to plasticise the material of the mounting portion and/or receiving portion;
cooling the plasticised material to form a friction weld between the mounting portion and receiving portion.

14. The method according to claim 13, wherein inducing mechanical movement comprises:
inducing rotary movement of the mounting portion relative to the receiving portion using a direct drive device or inertia drive device to rotate the guide pin relative to the brake carrier; or
inducing linear movement of the mounting portion relative to the receiving portion using an oscillating device to oscillate the guide pin in a linear direction relative to the brake carrier.

15. The method according to any of claims 11 to 14, further comprising removing or trimming flash at the intersection of the guide pin and brake carrier.
